# EUROPÄISCHE PATENTANMELDUNG

(11) **EP 4 740 727 A1**
(43) Veröffentlichungstag der Anmeldung: **13.05.2026**
(21) Anmeldenummer: 25213175.0
(22) Anmeldetag: 04.11.2025
(51) Int. Cl.: A01G 20/47

(54) **VORRICHTUNG ZUM ERZEUGEN EINES LUFTSTROMS**

(30) Priorität: 06.11.2024 DE 102024132370
(71) Anmelder: Einhell Germany AG, 94405 Landau / Isar (DE)
(72) Erfinder: Thannhuber, Markus, 94405 Landau (DE)
(74) Vertreter: Canzler & Bergmeier Patentanwälte Partnerschaft mbB

(57) **Zusammenfassung**

Beschrieben wird eine Vorrichtung (1), insbesondere handgeführt, zum Erzeugen eines Luftstroms, mit einem Gehäuse (2), einem Motor (3), einer mit dem Motor (3) in mechanischer Wechselwirkung stehenden Lüfteranordnung (4), und einer Austrittsdüse (5) für den Luftstrom. Es wird vorgeschlagen, dass die Vorrichtung (1) wenigstens ein Verstellelement (6) umfasst, mit dem eine Richtung, insbesondere ein Austrittswinkel (7), des Luftstroms einstellbar ist.

## Beschreibung

Die vorliegende Erfindung betrifft eine Vorrichtung, insbesondere handgeführt, zum Erzeugen eines Luftstroms, mit einem Gehäuse, einem Motor, einer mit dem Motor in mechanischer Wechselwirkung stehenden Lüfteranordnung, und einer Austrittsdüse für den Luftstrom.

Gattungsgemäße Vorrichtungen werden beispielsweise als Laubbläser zum Entfernen von Laub, Gras und anderen leichten Ablagerungen von Rasenflächen, Wegen und anderen Außenbereichen verwendet. Hierzu wird ein zielgerichteter, möglichst starker Luftstrom erzeugt, mit dem Material berührungslos von einem Benutzer bewegt werden kann. In der Praxis sehen sich Benutzer von Laubbläsern oft mit der Herausforderung konfrontiert, nicht nur trockene, leichte Ablagerungen zu entfernen, sondern auch feuchtes, schweres oder festsitzendes Material zu bewegen. Dies erfordert eine hohe Leistungsfähigkeit der Vorrichtung, insbesondere hinsichtlich der erzeugten Luftströmung.

Eine höhere Leistungsfähigkeit kann einerseits durch eine Vergrößerung der entsprechenden Motoren, Lüfteranordnungen und eventuell Energiespeicher erreicht werden. Hierbei wird die Vorrichtung jedoch schwerer und/oder größer und damit für einen Benutzer unhandlicher.

Die Aufgabe der vorliegenden Erfindung ist es daher, eine Vorrichtung zum Erzeugen eines Luftstroms zu schaffen, die leistungsfähig und zugleich für einen Benutzer leicht zu handhaben ist.

Die Aufgabe wird gelöst durch eine Vorrichtung mit den Merkmalen des unabhängigen Patentanspruchs. Vorteilhafte Ausführungen dieser Vorrichtungen sind Gegenstand der entsprechenden Unteransprüche.

Die erfindungsgemäße Vorrichtung zum Erzeugen eines Luftstroms ist insbesondere handgeführt. Sie wird beispielsweise ausschließlich durch die Muskelkraft eines Benutzers bewegt und insbesondere von dem Benutzer getragen. Die Vorrichtung kann ein Gehäuse aufweisen, das die Komponenten der Vorrichtung umfasst. Das Gehäuse kann beispielsweise aus Kunststoff hergestellt sein. Die Vorrichtung kann außerdem einen Motor und eine mit dem Motor in mechanischer Wechselwirkung stehende Lüfteranordnung umfassen, wobei der Motor die Lüfteranordnung in Rotation versetzen kann. Hierbei verursacht die Rotation der Lüfteranordnung insbesondere eine gerichtete Bewegung der Luft, die mit der Lüfteranordnung in Kontakt steht. Aufgrund der Veränderung des lokalen Drucks und der lokalen Luftdichte kann hierdurch ein Luftstrom entstehen. Um den entstehenden Luftstrom zielgerichtet zum Transport von Material verwenden zu können, kann die Vorrichtung außerdem eine Austrittsdüse für den Luftstrom aufweisen.

Es wird vorgeschlagen, dass die Vorrichtung wenigstens ein Verstellelement umfasst, mit dem eine Richtung, insbesondere ein Austrittswinkel, des Luftstroms einstellbar ist. Hierdurch kann der Luftstrom auf eine für den Benutzer bevorzugte und für die jeweilige Aufgabe angepasste Richtung eingestellt werden, insbesondere ohne, dass der Benutzer hierzu zusätzliche Muskelkraft aufbringen muss. Das Verstellelement kann hierzu beispielsweise direkt von dem Benutzer innerhalb und/oder außerhalb des regulären Betriebs der Vorrichtung betätigt werden. Insbesondere kann das Verstellelement mit einem oder mehreren beweglichen Luftleitelementen in Wirkverbindung stehen.

Der Luftstrom der Vorrichtung kann beispielsweise derart eingestellt werden, dass das von der Vorrichtung bewegte Material bei einer geradlinigen Bewegung des Benutzers immer auf einer Seite des Benutzers landet, so dass das Material stetig auf dieser Seite gesammelt wird. Auf diese Weise lassen sich auch große Flächen effizient reinigen. Ein in der Praxis übliches, für den Benutzer eventuell anstrengendes Schwenken eines Laubbläsers kann hierdurch eventuell entfallen.

In einer vorteilhaften Ausführungsform der Vorrichtung ist eine Austrittsöffnung der Austrittsdüse schlitzförmig ausgebildet. Die schlitzförmige Gestaltung der Austrittsöffnung bewirkt eine Fokussierung des austretenden Luftstroms in eine flächige Form. Hierdurch wird die Strömungsgeschwindigkeit der Luft erhöht und gleichzeitig eine breitere Abdeckung der zu reinigenden Fläche erreicht. Dies führt zu einer verbesserten Effizienz bei der Entfernung von Laub und anderen Materialien, insbesondere bei feuchten oder schweren Objekten. Durch die entstehende "harte Kante" des Luftstroms kann Material wie Laub eventuell von einer Oberfläche abgeschert statt nur vom Luftstrom mitgerissen werden. Die Vorrichtung kann hierdurch eine ähnliche Wirkung wie ein Eiskratzer bei einer Windschutzscheibe eines Automobils entfalten.

Unter "schlitzförmig" wird im Kontext dieser Erfindung beispielsweise eine Austrittsöffnung verstanden, deren Länge deutlich größer ist als ihre Breite. Beispielsweise beträgt das Verhältnis von Breite zu Länge mindestens 1 zu 50, insbesondere 1 zu 100, bevorzugt 1 zu 150 und besonders bevorzugt 1 zu 200. Die schlitzförmige Austrittsöffnung kann vorzugsweise eine längliche, rechteckige Form aufweisen. Alternativ kann die Austrittsöffnung auch beispielsweise halbkreisförmig ausgebildet sein. Hierbei kann eine Richtung, in die abgelöstes Material vom Luftstrom transportiert wird, eventuell noch besser kontrolliert werden.

In diesem Zusammenhang ist es vorteilhaft, wenn lange Kanten der Austrittsöffnung parallel zueinander ausgebildet sind. Die Parallelität der langen Kanten gewährleistet eine gleichmäßige Strömungscharakteristik über die gesamte Länge der Austrittsöffnung. Hierdurch wird beispielsweise ein homogener, laminarer Luftstrom erzeugt, der eine präzise Kontrolle der Luftströmung ermöglicht. Die parallele Anordnung minimiert zudem Turbulenzen an den Kanten, was zu einer Erhöhung der Effizienz des Luftstroms führt. Zusätzlich kann die parallele Kantenführung die strukturelle Integrität der Austrittsöffnung erhöhen. Dies ist insbesondere bei Vorrichtungen von Vorteil, die häufigen Belastungen oder Vibrationen ausgesetzt sind. Die gleichmäßige Spannungsverteilung entlang der parallelen Kanten kann die Lebensdauer der Austrittsdüse verlängern und somit die Wartungsintervalle des Geräts reduzieren.

Alternativ könnten die langen Kanten eine leichte Krümmung beinhalten, beispielsweise in Form eines sehr flachen Bogens oder einer Linse. Die langen Kanten sind hierbei beispielsweise konkav oder konvex zueinander angeordnet. Hierdurch kann insbesondere ein Gradient des Volumenstroms der bewegten Luft von einer Mitte der Austrittsdüse zu ihren äußeren Enden erzeugt werden.

Auch ist es von Vorteil, wenn ein maximaler Abstand zwischen den langen Kanten der Austrittsöffnung, also insbesondere die oben beschriebene Breite der Austrittsöffnung, weniger als 2 mm, bevorzugt weniger als 1 mm und besonders bevorzugt weniger als 0,5 mm, beträgt. Diese geringen Abstände führen zu einer signifikanten Erhöhung der Austrittsgeschwindigkeit des Luftstroms bei gleichbleibendem Volumenstrom. Die Verengung des Austrittsquerschnitts bewirkt gemäß dem Gesetz von Bernoulli eine Beschleunigung der Luft, was die Effizienz des Laubbläsers steigert.

Bei einem Abstand von weniger als 2 mm wird bereits eine deutliche Fokussierung des Luftstroms erreicht. Die Reduzierung auf weniger als 1 mm verstärkt diesen Effekt und ermöglicht eine präzisere Steuerung des Luftstrahls. Ein Abstand von weniger als 0,5 mm erzeugt einen besonders scharfen und konzentrierten Luftstrom, der selbst hartnäckige Verschmutzungen effektiv lösen kann.

Es ist denkbar, dass die Breite der Austrittsöffnung durch einen entsprechenden Mechanismus, beispielsweise an der Austrittsdüse, einstellbar ausgebildet ist.

Besondere Vorteile bringt es mit sich, wenn die Austrittsdüse beweglich ausgebildet ist und mit dem Verstellelement in Wechselwirkung steht. Falls die gesamte Austrittsdüse beweglich ausgeführt ist, sind eventuell keine zusätzlichen Luftleitelemente zur Ausrichtung des Luftstroms notwendig. Die Vorrichtung kann hierdurch robuster ausgebildet werden. Die Austrittsdüse kann hierzu beispielsweise linear verschiebbar ausgebildet sein.

Besonders vorteilhaft ist es aber, wenn die Austrittsdüse verschwenkbar, insbesondere um eine zum Luftstrom senkrecht stehende Achse, ausgebildet ist. Durch die Schwenkbarkeit der Austrittsdüse kann die erfindungsgemäße Vorrichtung flexibel eingesetzt werden, wobei die Austrittsdüse dennoch robust ausgebildet werden kann. Durch Verschwenken der Düse kann der Luftstrom in verschiedene Richtungen gelenkt werden, ohne dass der Benutzer seine Position ändern muss.

Die Verschwenkbarkeit um eine zum Luftstrom senkrecht stehende Achse erlaubt beispielsweise eine Rotation der Düse in der Ebene, die parallel zu einer Reinigungsoberfläche liegt. Der Schwenkwinkel kann beispielsweise zwischen -30° und +30°, bevorzugt zwischen -45° und +45°, besonders bevorzugt zwischen -60° und +60° liegen.

Des Weiteren ist es vorteilhaft, wenn die Vorrichtung ein Bedienelement aufweist, das mit dem Verstellelement in Wechselwirkung steht. Das Bedienelement erlaubt dem Benutzer die einfache Verstellung des Verstellelements bzw. der Richtung des Luftstroms. Insbesondere ermöglicht die Kombination von Bedienelement und Verstellelement eine dynamische Anpassung der Luftstromcharakteristik während des Betriebs. Das Bedienelement kann beispielswiese als Drehregler, Schieberegler, Joystick oder als Gruppe von Drucktasten ausgeführt sein.

Die Wechselwirkung zwischen Bedienelement und Verstellelement kann auf verschiedene Weise realisiert werden. Bei einer mechanischen Ausführung kann eine direkte Kopplung, beispielsweise über Seilzüge oder Gestänge erfolgen. Dies würde eine robuste und wartungsarme Lösung darstellen, die auch unter rauen Einsatzbedingungen zuverlässig funktioniert. Alternativ kann insbesondere eine elektronische Steuerung vorgesehen werden, bei der das Bedienelement Signale an eine Steuereinheit sendet, die wiederum das Verstellelement entsprechend ansteuert.

Besonders vorteilhaft ist es, wenn das Bedienelement an einem Griff der Vorrichtung oder am Verstellelement angeordnet ist. Hierdurch werden die Ergonomie der Vorrichtung und die Bedienbarkeit für den Benutzer verbessert. Die Anordnung des Bedienelements am Griff der Vorrichtung ermöglicht eine intuitive und bequeme Bedienung während des Betriebs und reduziert die körperliche Belastung und Ermüdungserscheinungen bei längerem Gebrauch der Vorrichtung.

Die Anordnung des Bedienelements am Verstellelement bietet den Vorteil einer direkten visuellen und haptischen Rückmeldung über die aktuelle Einstellung. Der Benutzer kann die Position oder Ausrichtung des Verstellelements unmittelbar erkennen und anpassen. Bei der Anordnung am Verstellelement kann das Bedienelement beispielsweise als Drehknopf oder Schieberegler ausgebildet sein.

Ebenso bringt es Vorteile mit sich, wenn das Bedienelement kabelgebunden oder kabellos in steuermäßiger Verbindung mit dem Verstellelement steht. Hierdurch kann der Abstand des Bedienelements und des Verstellelements an der Vorrichtung nahezu beliebig gewählt werden.

Eine kabelgebundene Verbindung zwischen Bedienelement und Verstellelement bietet den Vorteil einer zuverlässigen und störungsfreien Signalübertragung. Die kabelgebundene Lösung zeichnet sich durch eine geringe Latenz bei der Signalübertragung aus, was eine unmittelbare Reaktion des Verstellelements auf Benutzereingaben gewährleistet. Zudem ist diese Variante weniger anfällig für externe Störeinflüsse und benötigt keine separate Stromversorgung für das Bedienelement. Hierbei können verschiedene Technologien zum Einsatz kommen, wie beispielsweise elektrische Leitungen für analoge oder digitale Signale. Die Integration der Kabelverbindung in das Gehäuse des Laubbläsers kann so gestaltet werden, dass sie vor Umwelteinflüssen geschützt ist und die Bewegungsfreiheit des Benutzers nicht einschränkt.

Durch eine kabellose Verbindung kann das Bedienelement noch flexibler positioniert werden. Außerdem kann hierdurch eventuell auf eine zusätzliche Verkabelung verzichtet werden. Technologien wie beispielsweise Bluetooth Low Energy oder proprietäre Funkprotokolle können hierbei zum Einsatz kommen.

Vorteile bringt es zudem mit sich, wenn das Verstellelement als Aktor, insbesondere elektromechanischer Aktor, ausgebildet ist. Hierdurch kann die Richtung des Luftstroms präzise und insbesondere ohne Einsatz von Muskelkraft verstellt werden. Ein als elektromechanischer Aktor ausgebildetes Verstellelement kann beispielsweise auf elektrische Signale reagieren und diese in mechanische Bewegungen umsetzen. Elektromechanische Aktoren können in verschiedenen Ausführungen realisiert werden, beispielsweise als Elektromotoren, insbesondere Schrittmotoren, Linearmotoren und/oder Servomotoren.

In diesem Zusammenhang ist es besonders vorteilhaft, wenn das Verstellelement ausgebildet ist, die Richtung des Luftstroms periodisch zu verändern. Die periodische Veränderung der Luftstromrichtung ermöglicht eine gleichmäßige und großflächige Reinigung ohne die Notwendigkeit, das Gerät ständig manuell neu auszurichten. Durch die oszillierende Bewegung des Luftstroms wird ein breiterer Bereich abgedeckt, was besonders bei der Reinigung größerer Flächen wie Rasenflächen, Terrassen oder Einfahrten von Vorteil ist. Der sich ändernde Anströmwinkel erhöht zudem die Wahrscheinlichkeit, dass Laub und andere Materialien effektiv gelöst und bewegt werden, da sie aus verschiedenen Richtungen angeströmt werden.

Bei Verwendung eines elektromechanischen Aktors als Verstellelement kann beispielsweise ein Elektromotor mit einem Exzenter-Mechanismus gekoppelt werden, um eine Schwenkbewegung der Austrittsdüse zu erzeugen. Alternativ kann beispielsweise ein Schrittmotor eingesetzt werden, der die Düse in definierten Winkelschritten hin und her bewegt. Die Steuerungselektronik kann dabei vorzugsweise verschiedene Bewegungsmuster und Geschwindigkeiten realisieren, um die Reinigungsleistung an unterschiedliche Bedingungen anzupassen.

Die Frequenz und Amplitude der periodischen Richtungsänderung können insbesondere variabel gestaltet werden, um optimale Ergebnisse für verschiedene Reinigungsaufgaben zu erzielen. Eine langsame, weiträumige Schwenkbewegung kann beispielsweise für die großflächige Reinigung von trockenem Laub geeignet sein, während eine schnellere, eng begrenzte Oszillation effektiver bei der Entfernung von feuchtem oder schwerem Material sein könnte. Eine eng begrenzte schnelle Oszillation kann einen ähnlichen Effekt erzielen, wie eine oszillierende Düse eines Hochdruckreinigers.

Des Weiteren ist es vorteilhaft, wenn die Austrittsdüse wenigstens eine Gummilippe umfasst. Hierdurch kann einerseits die Führung des Luftstroms verbessert werden und andererseits die Vorrichtung und auch andere Gegenstände vor Beschädigungen geschützt werden. Die Gummilippe kann auch dazu beitragen, die Geräuschentwicklung des Laubbläsers zu reduzieren. Durch die Dämpfung von Vibrationen und die Glättung des Luftstroms an der Austrittsöffnung kann sie zu einer Verringerung von Turbulenzen und damit zu einer Senkung des Geräuschpegels beitragen.

Insbesondere sind zumindest zwei gegenüberliegende Gummilippen an der Austrittsdüse vorgesehen. Die Gummilippe kann durchgehend über eine gesamte Länge der Austrittsöffnung ausgebildet sein. Alternativ kann die Gummilippe auch in mehrere einzelne Abschnitte unterteilt sein, die über die Austrittsöffnung verteilt sind. Die Gummilippe kann insbesondere als Luftleitelement ausgebildet sein. Es ist ebenfalls denkbar, dass die Austrittsöffnung durch eine oder mehrere Gummilippen gebildet ist.

Ebenso bringt es Vorteile mit sich, wenn die wenigstens eine Gummilippe Verstärkungsstreben aufweist. Die Integration von Verstärkungsstreben in die Gummilippe dient primär der Optimierung ihrer mechanischen Eigenschaften. Durch die Streben wird eine gezielte Versteifung der Gummilippe erreicht, was ihre Formstabilität unter dem Einfluss des Luftstroms und bei Kontakt mit der zu reinigenden Oberfläche verbessert. Diese erhöhte Steifigkeit ermöglicht es, die Vorteile der flexiblen Gummilippe beizubehalten und gleichzeitig ihre Widerstandsfähigkeit gegen Verformung und Verschleiß zu steigern.

Die Gummilippe kann beispielsweise aus Kautschuk, insbesondere Ethylen-Propylen-Dien-Kautschuk (EPDM), Nitrilkautschuk (NBR), Chloropren-Kautschuk (CR, auch als Neopren bekannt), Fluorkautschuk (FKM), Styrol-Butadien-Kautschuk (SBR), Acrylnitril-Butadien-Kautschuk (NBR) und/oder Naturkautschuk (NR), Silikon, thermoplastischen Elastomeren (TPE) und/oder Polyurethan (PU) hergestellt sein.

Die Verstärkungsstreben können auf verschiedene Weise in die Gummilippe integriert werden, beispielsweise als längliche Elemente in Längsrichtung der Gummilippe, also senkrecht zum Luftstrom, wodurch eine gleichmäßige Verstärkung über die gesamte Länge erreicht wird. Alternativ oder ergänzend können die Verstärkungsstreben beispielsweise in Querrichtung der Gummilippe, also parallel zum Luftstrom, ausgerichtet sein. Außerdem ist es denkbar, dass die Verstärkungsstreben in einem Gittermuster oder als diagonale Verstrebungen angeordnet sind, um eine optimale Balance zwischen Flexibilität und Stabilität zu erzielen. Die Verstärkungsstreben können beispielsweise aus Kunststoff, Metall und/oder Verbundwerkstoff hergestellt sein.

Besondere Vorteile bringt es mit sich, wenn das Verstellelement ein Zahnrad umfasst. Die Verwendung eines Zahnrads im Verstellelement ermöglicht eine präzise und kontrollierte Übertragung von Rotationsbewegungen. Dies ist besonders vorteilhaft für die genaue Steuerung der Luftstromrichtung. Das Zahnrad kann beispielsweise direkt mit der schwenkbaren Austrittsdüse verbunden sein, wobei die Austrittsdüse hierbei vorzugsweise einen korrespondierenden Zahnkranz umfasst. Das Zahnrad kann beispielsweise am Gehäuse der Vorrichtung gelagert sein.

In Kombination mit einem elektrischen Antrieb, wie einem Schrittmotor oder Servomotor, kann das Zahnrad eine präzise elektronische Steuerung des Verstellelements ermöglichen. Dies eröffnet Möglichkeiten für automatisierte Verstellvorgänge und/oder vorprogrammierte Bewegungsmuster.

Vorteile bringt es zudem mit sich, wenn die Lüfteranordnung einen Axiallüfter, Radiallüfter oder Diagonallüfter umfasst. Der Axiallüfter zeichnet sich durch seine Fähigkeit aus, große Luftmengen bei vergleichsweise geringem Druckaufbau zu fördern. Der Axiallüfter ermöglicht einen starken, gerichteten Luftstrom, der besonders effektiv bei der großflächigen Reinigung von leichtem Material wie trockenem Laub oder Gras ist. Die axiale Bauweise erlaubt eine kompakte Integration in die Vorrichtung, was zu einer schlanken und ergonomischen Gestaltung beitragen kann. Zudem zeichnen sich Axiallüfter oft durch einen relativ geringen Energieverbrauch aus, was die Betriebszeit bei akkubetriebenen Geräten verlängern kann.

Im Gegensatz dazu bietet der Radiallüfter die Möglichkeit, einen höheren Druck bei geringerem Volumenstrom zu erzeugen. Diese Eigenschaft macht ihn besonders geeignet für Anwendungen, bei denen konzentrierte Luftströme benötigt werden, etwa zum Entfernen von feuchtem oder schwerem Laub oder zum Reinigen von Ecken und Fugen.

Der Diagonallüfter kann die Vorteile von Axial- und Radiallüftern vereinen. Er kann einen mittleren bis hohen Druck bei gleichzeitig gutem Volumenstrom erzeugen. Diese Charakteristik macht ihn vielseitig einsetzbar und besonders geeignet für Vorrichtungen, die in verschiedenen Anwendungsszenarien effektiv sein sollen. Insbesondere umfasst der Diagonallüfter Axial- und Radialstufen. Der Luftstrom kann hierdurch innerhalb der Lüfteranordnung kontinuierlich von einer Axial- in eine Radialrichtung umgelenkt werden. Der Lüfter der Lüfteranordnung kann unabhängig von der Ausführungsform des Lüfters, insbesondere als Impeller ausgebildet sein.

Ebenso ist es vorteilhaft, wenn der Motor als Elektromotor ausgebildet ist und die Vorrichtung insbesondere wenigstens einen austauschbaren Akkumulator umfasst. Die Verwendung eines Elektromotors als Antriebseinheit bietet gegenüber den ebenfalls verbreiteten Verbrennungsmotoren mehrere entscheidende Vorteile. Elektromotoren zeichnen sich durch einen hohen Wirkungsgrad aus, was zu einer effizienten Energienutzung führt. Zudem ermöglichen Elektromotoren einen geräuschärmeren Betrieb im Vergleich zu Verbrennungsmotoren, was besonders in lärmempfindlichen Umgebungen oder zu Zeiten mit Lärmschutzvorgaben von Vorteil ist. Die geringeren Vibrationen eines Elektromotors tragen zudem zum Benutzerkomfort bei und reduzieren die körperliche Belastung bei längerer Anwendung.

Ein weiterer Vorteil des Elektromotors liegt in seiner Wartungsarmut. Im Gegensatz zu Verbrennungsmotoren benötigen Elektromotoren keine regelmäßigen Öl- oder Filterwechsel, was die Betriebskosten senkt und die Benutzerfreundlichkeit erhöht. Die kompakte Bauweise von Elektromotoren ermöglicht zudem ein schlankeres und ergonomischeres Design der Vorrichtung.

Der austauschbare Akku ermöglicht einen unterbrechungsfreien Betrieb des Laubbläsers. Wenn ein Akku leer ist, kann er schnell gegen einen geladenen ausgetauscht werden, was besonders bei umfangreichen Reinigungsarbeiten oder im professionellen Einsatz von Vorteil ist. Diese Flexibilität erlaubt es dem Benutzer, die Arbeitszeit nach Bedarf zu verlängern, ohne auf langwierige Ladevorgänge warten zu müssen.

Weitere Vorteile der Erfindung sind in den nachfolgenden Ausführungsbeispielen beschrieben. Es zeigen, jeweils schematisch:
- **Figur 1**: eine schematische Draufsicht auf eine erste Ausführungsform der erfindungsgemäßen Vorrichtung,
- **Figur 2**: eine perspektivische schematische Ansicht einer zweiten Ausführungsform der erfindungsgemäßen Vorrichtung,
- **Figur 3**: eine schematische Seitenansicht einer dritten Ausführungsform der erfindungsgemäßen Vorrichtung,
- **Figur 4**: eine schematische Seitenansicht einer vierten Ausführungsform der erfindungsgemäßen Vorrichtung, und
- **Figur 5**: eine vergrößerte schematische Seitenansicht einer fünften Ausführungsform der erfindungsgemäßen Vorrichtung.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

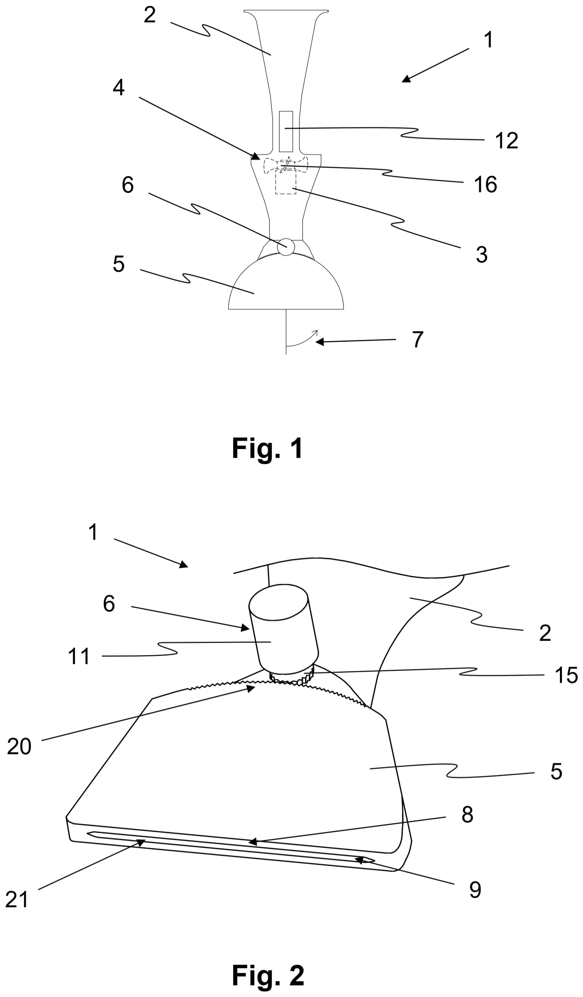

Figur 1 zeigt eine schematische Draufsicht auf eine erste Ausführungsform der erfindungsgemäßen Vorrichtung 1 zum Erzeugen eines Luftstroms. Die Vorrichtung 1 umfasst ein Gehäuse 2, in dem insbesondere ein Motor 3 und eine Lüfteranordnung 4 angeordnet sind. Der Motor 3 und die Lüfteranordnung 4 sind durch gestrichelte Linien angedeutet. Der Motor 3 steht in mechanischer Wechselwirkung mit der Lüfteranordnung 4, um diese in Rotation zu versetzen und dadurch einen gerichteten Luftstrom zu erzeugen.

In dieser Ansicht ist am unteren Ende der Vorrichtung 1 eine Austrittsdüse 5 angeordnet, durch welche der erzeugte Luftstrom austritt. Erfindungsgemäß umfasst die Vorrichtung 1 ein Verstellelement 6. Die Austrittsdüse 5 ist mit dem Verstellelement 6 insbesondere derart verbunden, dass eine Richtung des Luftstroms, insbesondere ein Austrittswinkel 7 des Luftstroms, einstellbar ist. Dies erlaubt eine präzise Einstellung der Luftstromrichtung, ohne dass ein Benutzer der Vorrichtung 1 seine Position oder Haltung ändern muss. Das Verstellelement 6 kann hierbei beispielsweise als elektromechanischer Aktor ausgebildet sein.

Im oberen Bereich des Gehäuses 2 umfasst die Vorrichtung 1 einen Griff 12. Die Vorrichtung 1 ist somit insbesondere handgeführt. Die Lüfteranordnung 4 umfasst in diesem Ausführungsbeispiel einen Axiallüfter 16. Der Axiallüfter 16 zeichnet sich insbesondere durch die Fähigkeit aus, große Luftmengen bei vergleichsweise geringem Druckaufbau zu fördern. Dies ermöglicht einen starken, gerichteten Luftstrom, der besonders effektiv bei der großflächigen Reinigung von leichtem Material wie trockenem Laub oder Gras ist.

Die Austrittsdüse 5 kann eine insbesondere schlitzförmige Austrittsöffnung 21 aufweisen (siehe Figur 2), deren Länge deutlich größer ist als ihre Breite. Dies bewirkt eine Fokussierung des austretenden Luftstroms in eine flächige Form, was zu einer erhöhten Strömungsgeschwindigkeit der Luft und einer breiteren Abdeckung der zu reinigenden Fläche führt. Durch die entstehende Kante 8 der eine zu reinigende Oberfläche anströmenden Luft wird eine verbesserte Effizienz bei der Entfernung von Laub und anderen Materialien, insbesondere bei feuchten oder schweren Objekten, erreicht.

Figur 2 zeigt eine perspektivische schematische Ansicht einer zweiten Ausführungsform der erfindungsgemäßen Vorrichtung 1. Hier ist der Bereich der Austrittsdüse 5 vergrößert dargestellt. Deutlich zu erkennen ist in dieser Ansicht die Austrittsöffnung 21 der Austrittsdüse 5, die insbesondere schlitzförmig ausgebildet ist. Beispielsweise sind hierbei lange Kanten 8 der Austrittsöffnung 21 parallel zueinander angeordnet. Diese Parallelität gewährleistet eine gleichmäßige Strömungscharakteristik über die gesamte Länge der Austrittsöffnung 21, was zu einem homogenen, laminaren Luftstrom führt.

Ein Abstand 9 zwischen den gegenüberliegenden Kanten 8 der Austrittsöffnung 21 ist vorzugsweise geringgehalten. Dieser geringe Abstand, der vorzugsweise weniger als 2 mm, insbesondere weniger als 1 mm und besonders bevorzugt weniger als 0,5 mm beträgt, führt gemäß dem Gesetz von Bernoulli zu einer signifikanten Erhöhung der Austrittsgeschwindigkeit des Luftstroms bei gleichbleibendem Volumenstrom.

Die Wechselwirkung zwischen dem Verstellelement 6 und der insbesondere beweglich ausgeführten Austrittsdüse 5 wird in diesem Ausführungsbeispiel über ein Zahnrad 15 gewährleistet, das beispielsweise in einen Zahnkranz 20 der Austrittsdüse 5 eingreift. Dies ermöglicht eine präzise und kontrollierte Übertragung von Rotationsbewegungen, was eine genaue Steuerung der Luftstromrichtung gewährleistet.

In diesem Beispiel ist ein Bedienelement 11 in das Verstellelement 6 integriert, womit ein Benutzer unmittelbar die Richtung des Luftstroms einstellen kann. Der Benutzer erlangt hierdurch eine direkte visuelle und haptische Rückmeldung über die aktuelle Einstellung des Verstellelements 6.

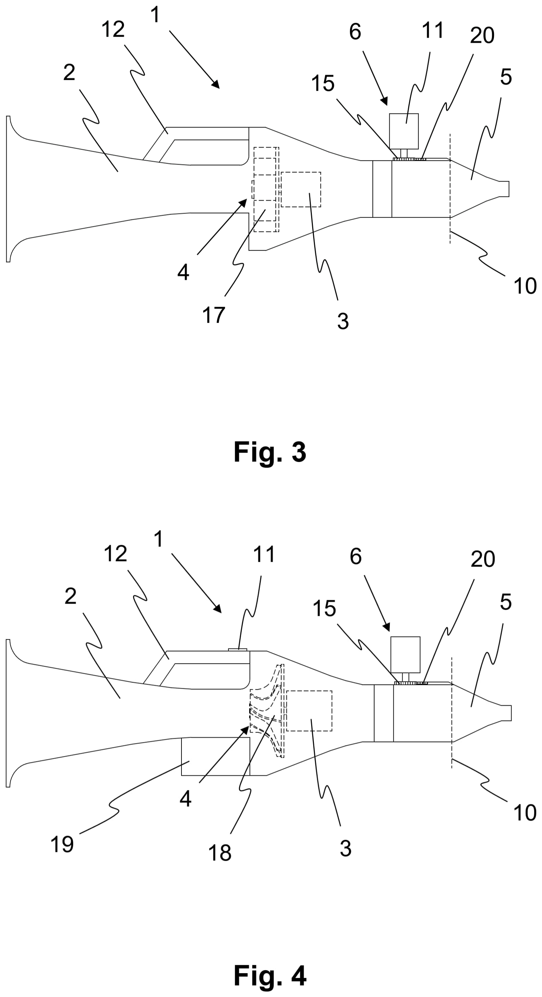

Figur 3 zeigt eine schematische Seitenansicht einer dritten Ausführungsform der erfindungsgemäßen Vorrichtung 1. In dieser Ausführungsform umfasst die Lüfteranordnung 4 einen Radiallüfter 17. Der Radiallüfter 17 bietet die Möglichkeit, einen höheren Druck bei geringerem Volumenstrom zu erzeugen.

Die Austrittsdüse 5 ist um eine Achse 10, die insbesondere senkrecht zum Luftstrom ausgerichtet ist, verschwenkbar ausgebildet. Die Verschwenkung der Austrittsdüse 5 wird durch das Verstellelement 6 über die Wechselwirkung des Zahnrads 15 und des Zahnkranzes 20 an der Austrittsdüse 5 verursacht. Das Bedienelement 11 ist wie zuvor unmittelbar in das Verstellelement 6 integriert und beispielsweise als zylindrischer Drehknopf ausgebildet.

Figur 4 zeigt eine schematische Seitenansicht einer vierten Ausführungsform der erfindungsgemäßen Vorrichtung 1. In dieser Ausführungsform umfasst die Lüfteranordnung 4 einen Diagonallüfter 18. Der Diagonallüfter 18 vereint die Vorteile von Axial- und Radiallüftern 16, 17, indem er einen mittleren bis hohen Druck bei gleichzeitig gutem Volumenstrom erzeugen kann. Der Diagonallüfter 18 leitet den Luftstrom beispielsweise kontinuierlich von einer Axialrichtung in eine Radialrichtung und umfasst insbesondere eine Axial- und Radialstufe. Schaufeln des Diagonallüfters 18 gehen beispielsweise kontinuierlich von einer Axial- in eine Radialform über. Insgesamt ermöglicht der Diagonallüfter 18 eine effiziente Luftstromerzeugung bei kompakter Bauweise der Vorrichtung 1.

Der Motor 3 ist in dieser Ausführungsform als Elektromotor ausgebildet und wird von einem Akkumulator 19 mit elektrischer Energie versorgt. Der Akkumulator 19 ist insbesondere als austauschbarer Akkumulator 19 ausgeführt.

Das Bedienelement 11 ist in dieser Ausführungsform am Griff 12 angeordnet. Diese Positionierung ermöglicht eine intuitive und bequeme Bedienung während des Betriebs der Vorrichtung 1. Das Verstellelement 6 ist hierbei insbesondere als elektromechanischer Aktor ausgebildet. Signale des Bedienelements 11 können beispielsweise durch eine nicht dargestellte Verkabelung oder kabellos an das Verstellelement 6 übertragen werden und insbesondere eine Verschwenkung der Austrittsdüse 5 auslösen.

Das Verstellelement 6 kann so ausgebildet sein, dass es die Richtung des Luftstroms periodisch verändert. Dies ermöglicht eine gleichmäßige und großflächige Reinigung ohne die Notwendigkeit, die Vorrichtung 1 ständig manuell neu auszurichten. Die oszillierende Bewegung des Luftstroms erhöht die Wahrscheinlichkeit, dass Laub und andere Materialien effektiv gelöst und bewegt werden, da sie aus verschiedenen Richtungen angeströmt werden.

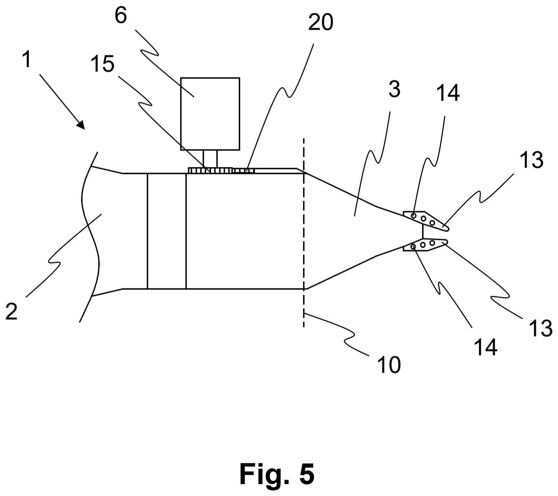

Figur 5 zeigt eine vergrößerte schematische Seitenansicht einer fünften Ausführungsform der erfindungsgemäßen Vorrichtung 1, die sich auf die Details der Austrittsdüse 5 konzentriert. Die Austrittsdüse 5 ist wie zuvor um die Achse 10 verschwenkbar ausgebildet. An ihrem vorderen Ende sind insbesondere zwei gegenüberliegende Gummilippen 13 angeordnet. Die Gummilippen 13 können die Führung des Luftstroms verbessern, indem sie beispielsweise als Luftleitelemente dienen.

Außerdem können die Gummilippen 13 die Vorrichtung 1 und andere Gegenstände vor Beschädigungen schützen. Durch die Aufnahme von Vibrationen können die Gummilippen 13 ebenfalls zur Reduzierung der Geräuschentwicklung der Vorrichtung 1 beitragen. Um die Anströmung der zu reinigenden Oberfläche, die sich normalerweise unterhalb der Vorrichtung 1 befindet, zu verbessern, können die Gummilippen 13 asymmetrisch zueinander angeordnet sein.

In diesem Ausführungsbeispiel sind außerdem Verstärkungsstreben 14 in die Gummilippen 13 integriert. Diese Verstärkungsstreben 14 optimieren die mechanischen Eigenschaften der Gummilippen 13. Sie erhöhen die Formstabilität unter dem Einfluss des Luftstroms und bei Kontakt mit der zu reinigenden Oberfläche unter Beibehaltung einer Flexibilität der Gummilippen 13. Die Verstärkungsstreben 14 sind in diesem Beispiel senkrecht zum Luftstrom ausgerichtet. Wie zuvor beschrieben, kommen aber ebenfalls andere Ausrichtungen der Verstärkungsstreben 14 in Betracht.

### Bezugszeichenliste

- 1: Vorrichtung
- 2: Gehäuse
- 3: Motor
- 4: Lüfteranordnung
- 5: Austrittsdüse
- 6: Verstellelement
- 7: Austrittswinkel
- 8: Kante
- 9: Abstand
- 10: Achse
- 11: Bedienelement
- 12: Griff
- 13: Gummilippe
- 14: Verstärkungsstrebe
- 15: Zahnrad
- 16: Axiallüfter
- 17: Radiallüfter
- 18: Diagonallüfter
- 19: Akkumulator
- 20: Zahnkranz
- 21: Austrittsöffnung

## Patentansprüche

1. Vorrichtung (1), insbesondere handgeführt, zum Erzeugen eines Luftstroms, mit
- einem Gehäuse (2),
- einem Motor (3),
- einer mit dem Motor (3) in mechanischer Wechselwirkung stehenden Lüfteranordnung (4), und
einer Austrittsdüse (5) für den Luftstrom
**dadurch gekennzeichnet,**
**dass** die Vorrichtung (1) wenigstens ein Verstellelement (6) umfasst, mit dem eine Richtung, insbesondere ein Austrittswinkel (7), des Luftstroms einstellbar ist.

2. Vorrichtung (1) nach dem vorherigen Anspruch, **dadurch gekennzeichnet, dass** eine Austrittsöffnung (21) der Austrittsdüse (5) schlitzförmig ausgebildet ist.

3. Vorrichtung (1) nach dem vorherigen Anspruch, **dadurch gekennzeichnet, dass** lange Kanten (8) der Austrittsöffnung (21) parallel zueinander ausgebildet sind.

4. Vorrichtung (1) nach dem vorherigen Anspruch, **dadurch gekennzeichnet, dass** ein maximaler Abstand (9) zwischen den langen Kanten (8) der Austrittsöffnung (21) weniger als 2 mm, bevorzugt weniger als 1 mm und besonders bevorzugt weniger als 0,5 mm, beträgt.

5. Vorrichtung (1) nach einem der vorherigen Ansprüche, **dadurch gekennzeichnet, dass** die Austrittsdüse (5) beweglich ausgebildet ist und mit dem Verstellelement (6) in Wechselwirkung steht.

6. Vorrichtung (1) nach dem vorherigen Anspruch, **dadurch gekennzeichnet, dass** die Austrittsdüse (5) verschwenkbar, insbesondere um eine zum Luftstrom senkrecht stehende Achse (10), ausgebildet ist.

7. Vorrichtung (1) nach einem der vorherigen Ansprüche, **gekennzeichnet durch** ein Bedienelement (11), das mit dem Verstellelement (6) in Wechselwirkung steht.

8. Vorrichtung (1) nach dem vorherigen Anspruch, **dadurch gekennzeichnet, dass** das Bedienelement (11) an einem Griff (12) der Vorrichtung (1) oder am Verstellelement (6) angeordnet ist.

9. Vorrichtung (1) nach einem der vorherigen Ansprüche, **dadurch gekennzeichnet, dass** das Bedienelement (11) kabelgebunden oder kabellos in steuermäßiger Verbindung mit dem Verstellelement (6) steht.

10. Vorrichtung (1) nach einem der vorherigen Ansprüche, **dadurch gekennzeichnet, dass** das Verstellelement (6) als Aktor, insbesondere elektromechanischer Aktor, ausgebildet ist.

11. Vorrichtung (1) nach dem vorherigen Anspruch, **dadurch gekennzeichnet, dass** das Verstellelement (6) ausgebildet ist, die Richtung des Luftstroms periodisch zu verändern.

12. Vorrichtung (1) nach einem der vorherigen Ansprüche, **dadurch gekennzeichnet, dass** die Austrittsdüse (5) wenigstens eine Gummilippe (13), insbesondere mit Verstärkungsstreben (14), umfasst.

13. Vorrichtung (1) nach einem der vorherigen Ansprüche, **dadurch gekennzeichnet, dass** das Verstellelement (6) ein Zahnrad (15) umfasst.

14. Vorrichtung (1) nach einem der vorherigen Ansprüche, **dadurch gekennzeichnet, dass** die Lüfteranordnung (4) einen Axiallüfter (16), Radiallüfter (17) oder Diagonallüfter (18) umfasst.

15. Vorrichtung (1) nach einem der vorherigen Ansprüche, **dadurch gekennzeichnet, dass** der Motor (3) als Elektromotor ausgebildet ist und die Vorrichtung (1) insbesondere wenigstens einen austauschbaren Akkumulator (19) umfasst.
